Europäisches Patentamt

European Patent Office

Office européen des brevets

(11) Veröffentlichungsnummer: **0 202 575**
**B1**

(12) **EUROPÄISCHE PATENTSCHRIFT**

(45) Veröffentlichungstag der Patentschrift:
25.04.90

(51) Int. Cl.⁴: **A23G 3/02**

(21) Anmeldenummer: 86106452.5

(22) Anmeldetag: 13.05.86

(54) Verfahren und Vorrichtung zum Aufbereiten und zum Bereitstellen von Nugatmasse für die Weiterverarbeitung.

(30) Priorität: 18.05.85 DE 3517960

(43) Veröffentlichungstag der Anmeldung:
26.11.86 Patentblatt 86/48

(45) Bekanntmachung des Hinweises auf die Patenterteilung:
25.04.90 Patentblatt 90/17

(84) Benannte Vertragsstaaten:
AT CH DE FR GB IT LI NL SE

(56) Entgegenhaltungen:
DE-A- 3 002 296
FR-A- 1 381 802
FR-A- 2 063 186
GB-A- 863 469
GB-A- 907 722
US-A- 2 726 960

(73) Patentinhaber: Wilhelm Rasch GmbH & Co
Spezialmaschinenfabrik, Mathias-Brüggen-Strasse 9,
D-5000 Köln 30(DE)

(72) Erfinder: Römling, Otto, An der Mühle 5,
D-5000 Köln 41(DE)

(74) Vertreter: Vierkötter, Hans-Ulrich, Patentanwalt
Dipl.-Ing. Vierkötter Haus Dorp, D-5204 Lohmar 21(DE)

## Beschreibung

Die Erfindung betrifft ein Verfahren zur Aufarbeitung bzw. Bereitstellung von Nugatmasse in einem für die Weiterverarbeitung geeigneten Zustand sowie eine insbesondere nach diesem Verfahren arbeitende Vorrichtung.

Bei einem bekannten Verfahren zur Aufarbeitung von Nugatmasse (DE-A 3 002 296) ist eine kontinuierliche Verarbeitung in der Weise vorgesehen, daß die Ausgangsmasse aus einem zunächst noch flüssigen Zustand durch Temperieren vorkristallisiert und abgekühlt und anschließend durch weitere Abkühlung zum Erstarren gebracht wird, worauf die erstarrte Masse gegebenenfalls noch durch mechanische Behandlung plastifiziert und in diesem Zustand zur Weiterverarbeitung bereitgestellt wird.

Ein solches Verfahren der kontinuierlichen Aufbereitung von Nugatmasse hat sich als wenig brauchbar erwiesen. Die Gründe hierfür sind schwer erfaßbar. Sie sind sicherlich zum Teil darin zu sehen, daß unter dem Begriff Nugatmasse Massen zusammengefaßt werden, die in ihrer Zusammensetzung sehr unterschiedlich sein können und die sich nicht nur in ihren Bestandteilen sondern auch in wesentlichen Eigenschaften, wie Kristallisationstemperatur, Erstarrungszeit und dergleichen, voneinander unterscheiden. Alle diese Massen bedürfen - was von wesentlicher Bedeutung zu sein scheint - einer unterschiedlichen Behandlung, die auf die jeweiligen Eigenschaften und die Zusammensetzung der Massen abgestimmt ist, wobei mitbestimmend für die Güte des bereit zu stellenden Produktes auch die bereit zu stellende Menge ist und insbesondere Schwankungen in der Menge der weiterverarbeiteten Masse von nicht unwesentlichem Einfluß sind.

Ein Verfahren zur Aufarbeitung von Nugatmasse für deren Bereitstellung zur Weiterverarbeitung sollte nicht nur an die mannigfachsten Zusammensetzungen der Masse sondern auch an deren jeweilige Eigenschaften in hohem Maße anpaßbar sein. Das bekannte Aufbereitungsverfahren ist dies, wenn überhaupt, nur in unbedeutendem Umfange und liefert daher in bestimmten Fällen nur unbefriedigende Ergebnisse.

Der Erfindung liegt daher in erster Linie die Aufgabe zu Grunde, ein Verfahren der eingangs genannten Art zum Aufarbeiten von Nugatmasse zu schaffen, durch welches diese in einem für die Weiterverarbeitung gewünschten Zustand bereitgestellt wird, und zwar ein Verfahren zu schaffen, das nicht nur eine Anpassung der Behandlung an die unterschiedlichsten Massezusammensetzungen sondern auch an deren Eigenschaften ermöglicht, so daß ein Zwischenprodukt gebildet wird, das für die Weiterverarbeitung in gleichbleibender Güte bereitgestellt wird. Der Erfindung liegt hierbei die weitere Aufgabe zu Grunde, ein solches Ergebnis bei einer Vorrichtung der genannten Art mit möglichst wenig zusätzlichen Mitteln realisierbar zu machen.

Eine solche Aufgabe kann gemäß der Erfindung in Abkehr von der bekannten Arbeitsweise bei der Aufbereitung von Nugatmasse dadurch gelöst werden, daß man einen Massekreislauf aus Nugatmasse bildet, aus dem die für die Weiterverarbeitung bereit zu stellende, aufbereitete Nugatmasse in temperiertem Zustand abgezweigt und in den an einer auf die Abzweigstelle im Kreislauf folgenden Stelle eine der abgezweigten Masse entsprechende Menge aus einem Massevorrat eingespeist wird, die mit der im Kreislauf befindlichen Menge gemischt wird. Dieses Mischen kann unter gleichzeitiger Abkühlung der neu zugeführten Masse erfolgen und die gut durchgemischte Masse kann, nachdem sie gegebenenfalls kurzzeitig erwärmt worden ist, temperiert, d.h. vorkristallisiert, werden, bevor ein Teil für die Weiterverarbeitung abgezweigt wird. Der unmittelbar nach der Abzweigung zunächst im Kreislauf verbleibende, zurückgeführte Teil der Nugatmasse sollte in seiner Menge regelbar und/oder einstellbar sein. Der abgezweigte, für die Weiterverarbeitung bestimmte Teil der Masse kann noch einer Nachbehandlung unterworfen werden, bevor er für die Weiterverarbeitung bereitgestellt wird. Er kann beispielsweise als Strang ausgepresst und auf einer Unterlage abgelegt werden und er kann nach dem Ablegen zumindest für eine gewisse Zeit sich selbst überlassen bleiben und/oder gegebenenfalls in einen abgegrenzten Raum gebracht werden, um ihn vor äußeren Einflüssen zu schützen oder in bestimmter Weise, beispielsweise durch Kühlen oder Erwärmen, zu beeinflussen.

Zur Durchführung des erfindungsgemäßen Verfahrens kann eine Vorrichtung dienen, die eine sogenannte Temperiermaschine herkömmlicher Bauart einschließt, in deren Ausgangsleitung erfindungsgemäß eine Leitungsverzweigung angeordnet ist, durch die der Massestrom aus der Temperiermaschine in zwei Teilströme aufteilbar ist, deren Anteil am Gesamtstrom regelbar und/oder einstellbar ist und von denen der eine Zweig über Fördereinrichtungen an eine Abgabestelle für die Weiterverarbeitung geführt ist während der andere Zweig mit einer in Reihe in einem Rückführkreislauf mit der Eingangsseite der Temperiermaschine liegenden Mischeinrichtung verbunden ist, in der eine mit einem Vorratsbehälter für Nugatmasse verbundene Zuführungsleitung für den mengenmäßigen Ausgleich der auf der Abgabeseite abgegebenen Masse mündet. In den Rückführkreislauf kann, zweckmäßigerweise unmittelbar hinter der Leitungsverzweigung, eine regelbare und/oder einstellbare Massepumpe geschaltet sein. Die Mischeinrichtung kann als eine mehr oder weniger langgestreckte Kammer ausgebildet sein, in der Elemente, die ein Durchmischen der Masse unterstützen, angeordnet sind. Die Mündung der Zuführungsleitung vom Massevorrat sollte an der Eingangsseite der Mischeinrichtung, also an der Seite, an der die Rückführungsleitung von der Verzweigungsstelle mündet, angeordnet sein. Die Mischeinrichtung besitzt zweckmäßigerweise eine Kühleinrichtung und kann in der Art einer Temperiereinrichtung mit einer Temperierschnecke als Förderelement ausgebildet sein. Zwischen Mischeinrichtung und Eingangsseite der Temperiermaschine kann gegebenenfalls, wenn besondere Massezusammensetzungen dies zweckmäßig machen, eine Wärmeeinrichtung geschaltet sein. Der gesamte Massekreislauf sollte durch Temperaturmeßeinrichtungen, die über die Länge des Kreislaufs in Abständen verteilt sind, überwachbar und steuerbar sein. In den zur Abgabestelle führenden Zweig der Masse ist vorzugsweise eine Düse oder dergleichen eingeschaltet, aus der ein Massestrang auspreßbar ist, der zweckmäßigerweise auf einem kontinuierlich, und zwar insbesondere mit regelbarer und/oder einstellbarer Geschwindigkeit angetriebenen Transportband ablegbar ist. Dieses Transportband und insbesondere der Massestrang kann auf dem Weg von der Düse bis zur Abgabestelle zumindest auf einem Teil dieser Strecke durch eine Klimakammer geführt sein, die ihn von äußeren Einflüssen abschirmt und/oder in irgendeiner Weise, wie durch Abkühlen oder Erwärmen, beeinflußt.

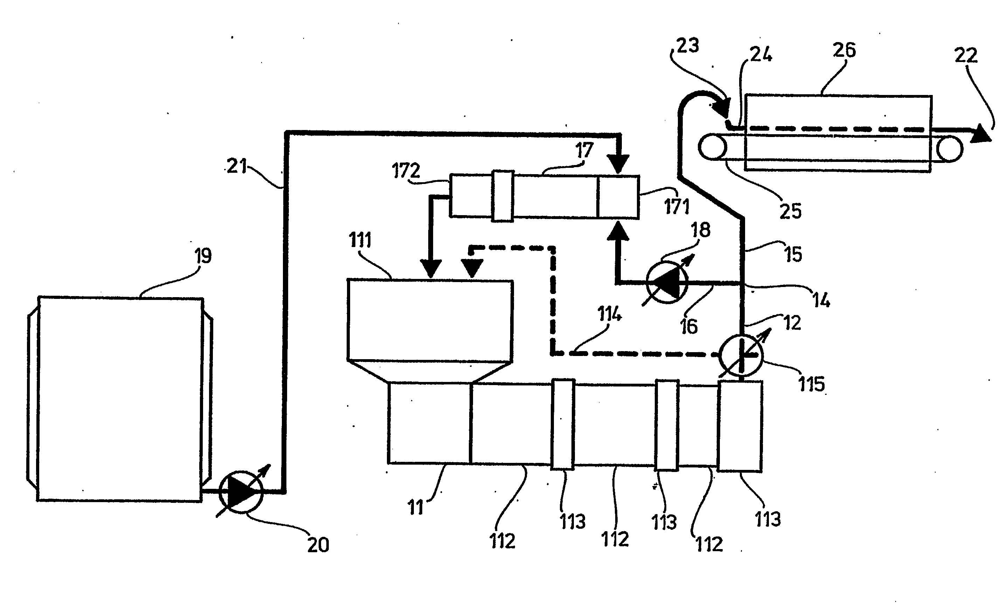

An Hand der in der Zeichnung stark schematisiert im Prinzip mit den zum Verständnis wesentlichen Teilen dargestellten Vorrichtung soll die Erfindung näher erläutert werden.

Die in der Zeichnung dargestellte Vorrichtung geht von einer herkömmlichen Temperiermaschine 11 aus, in deren Aufgabebehälter 111 die zu temperierende Masse eingegeben wird. Die Masse verläßt die Maschine nach Durchlaufen mehrerer Verarbeitungszonen 112, die durch Temperaturmeßeinrichtungen 113 überwacht und gesteuert werden, als temperierte, d.h. vorkristallisierte Nugatmasse und wird über die Leitung 12 der weiteren Behandlung zugeführt. Die in der Zeichnung gestrichelt dargestellte Leitung 114, die während der Anlaufphase der Maschine über ein Umschaltventil 115 einschaltbar ist und die gesamte Ausgangsmasse in den Aufgabebehälter 111 zurückführt, dient lediglich dazu, die Anlage betriebsbereit zu machen.

Sobald die Betriebsbereitschaft der Temperiermaschine erreicht ist, kann Nugatmasse über die Leitung 12 der Weiterverarbeitung zugeführt werden. Die Masse gelangt zunächst an eine Verzweigung 14 und wird dort in einen über die Leitung 15 der Weiterverarbeitung zugeführten Zweig und einen über die Leitung 16 im Kreislauf über einen in Reihe geschalteten Mischer 17 zurück zur Temperiermaschine 11 führenden Zweig aufgeteilt. In die Leitung 16 ist eine regelbare Förderpumpe 18 geschaltet (die Regelbarkeit ist durch den Pfeil angedeutet), die die Menge der zurückgeführten Masse maßgeblich bestimmt und diese zunächst in die Mischeinrichtung 17 fördert. Es handelt sich im dargestellten Beispiel bei der Mischeinrichtung um einen gekühlten Zylinder mit einer Förderschnecke, die mit einer Temperiermaschine vergleichbar ist und die Masse von der Eingangsseite 171 zum Ausgang 172 fördert, von wo sie in den Aufgabebehälter 111 der Temperiermaschine zurückgeführt wird. In die Mischeinrichtung 17 wird außer der zurückgeführten Nugatmasse neue, noch flüssige Nugatmasse, die eine erhöhte Temperatur besitzt, aus dem Vorratsbehälter 19 über eine regelbare Pumpe 20 und die Leitung 21 eingeführt. Die Einführung erfolgt wiederum an der Eingangsseite des Mischers 17, so daß während des Durchlaufs durch den Mischer eine gute Durchmischung der beiden Masseströme erzielt wird. Über die regelbare Pumpe 20 kann die über die Leitung 21 neu eingeführte Masse dem Verbrauch an der Abgabestelle 22 angepaßt werden.

Die die Temperiermaschine über die Leitung 12 verlassende temperierte Masse gelangt nach Durchlaufen der Verzweigung 14 über die Leitung 15 zu einer Düse 23, aus der sie in Form eines Stranges 24, der irgendeinen gewünschten Querschnitt besitzen kann, ausgepreßt wird. Der ausgepreßte Massestrang 24 wird auf einem Förderband 25 abgelegt, welches mit gleichbleibender, einstell- bzw. regelbarer Geschwindigkeit angetrieben wird. Auf diesem Bande liegend wird der Massestrang eine vorgegebene, mehr oder weniger lange Zeit, die durch die Bandgeschwindigkeit beeinflußbar ist, zum Auskristallisieren sich selbst überlassen und gelangt schließlich an die Abgabestelle 22, von wo er der Weiterverarbeitung zugeführt wird. Um den Strang 25 von äußeren Einflüssen, insbesondere von Unterschieden in der Umgebungstemperatur frei zu halten, sollte die gesamte Förderstrecke auf dem Band 25 durch einen Tunnel 26 geschützt sein, in dem ein vorgegebenes Klima aufrechterhalten wird, um ein möglichst gleichmäßiges Produkt an der Abgabestelle 22 für die Weiterverarbeitung bereit zu stellen.

**Patentansprüche**

1. Verfahren zum Aufbereiten von Nugatmasse für die Weiterverarbeitung in einer Verarbeitungsmaschine, dadurch gekennzeichnet, daß ein Massekreislauf aus Nugatmasse gebildet wird, aus dem die für die Weiterverarbeitung bereit zu stellende, aufbereitete Nugatmasse in temperiertem Zustand abgezweigt wird und in deren nach der Abzweigstelle im Kreislauf verbleibenden, in seiner Menge regelbaren und/oder einstellbaren Teile an einer auf die Abzweigstelle im Kreislauf folgenden Stelle aus einem Massevorrat eine der abgezweigten Masse entsprechende Menge eingespeist wird, die mit der im Kreislauf befindlichen Menge gemischt und zusammen mit dieser als durchmischte Masse temperiert wird, bevor ein Teil für die Weiterverarbeitung abgezweigt wird.

2. Verfahren nach Anspruch 1, dadurch gekennzeichnet, daß das Mischen unter Abkühlung der neu zugeführten Masse durchgeführt wird.

3. Verfahren nach Anspruch 1 oder 2, dadurch gekennzeichnet, daß die Masse nach dem Mischen erwärmt wird, bevor sie temperiert wird.

4. Verfahren nach einem oder mehreren der Ansprüche 1 bis 3, dadurch gekennzeichnet, daß der abgezweigte Teil der Masse einer Nachbehandlung unterworfen wird.

5. Verfahren nach Anspruch 4, dadurch gekennzeichnet, daß der abgezweigte Teil in Strangform ausgepreßt und auf einer Unterlage abgelegt wird.

6. Verfahren nach Anspruch 4 oder 5, dadurch gekennzeichnet, daß der abgelegte Massestrang zumindest für eine gewisse Zeit sich selbst überlassen bleibt.

7. Verfahren nach Anspruch 4, 5 oder 6, dadurch gekennzeichnet, daß der abgelegte Strang zum Schutz gegen äußere Einflüsse in einen abgegrenzten bzw. weitgehend abgegrenzten Raum gebracht wird.

8. Verfahren nach Anspruch 4, 5 oder 6, dadurch gekennzeichnet, daß der abgelegte Strang durch Kühlen oder Erwärmen beeinflußt wird.

9. Vorrichtung zum Aufbereiten von Nugatmasse für die Weiterverarbeitung, zur Durchführung des Verfahrens nach einem oder mehreren der Ansprüche 1 bis 8, unter Verwendung einer Temperiermaschine, gekennzeichnet durch eine in die Ausgangsleitung der Temperiermaschine eingeschaltete Leitungsverzweigung, durch die der die Temperiermaschine verlassende Massestrom in zwei Teilströme aufteilbar ist, deren Anteil am Gesamtstrom regelbar und/oder einstellbar ist und von denen der eine Zweig über Fördereinrichtungen an eine Abgabestelle für die Weiterverarbeitung geführt ist, während der andere Zweig mit einer Mischeinrichtung, die vornehmlich mit einer Kühleinrichtung ausgerüstet ist, verbunden ist, die in einem Rückführkreislauf in Reihe mit der Eingangsseite der Temperiermaschine liegt und an deren Eingangsseite eine mit einem Vorratsbehälter für Nugatmasse verbundene Zuführungsleitung für den mengenmäßigen Ausgleich der auf der Abgabeseite abgegebenen Masse mündet, wobei der Massekreislauf durch Temperaturmeßeinrichtungen überwachbar und steuerbar ist, die in den zu seiner Bildung dienenden Teilen über die Länge des Kreislaufs in Abständen verteilt angeordnet sind.

10. Vorrichtung nach Anspruch 9, dadurch gekennzeichnet, daß in den Rückführkreislauf, insbesondere unmittelbar hinter der Leitungsverzweigung, eine regelbare bzw. einstellbare Massepumpe geschaltet ist.

11. Vorrichtung nach Anspruch 9 oder 10, dadurch gekennzeichnet, daß die Mischeinrichtung als mehr oder weniger langgestreckte Kammer ausgebildet ist, in der das Durchmischen der Masse unterstützende Elemente angeordnet sind.

12. Vorrichtung nach einem oder mehreren der Ansprüche 9 bis 11, dadurch gekennzeichnet, daß die Mischeinrichtung in der Art einer Temperiereinrichtung mit einer Temperierschnecke als Förder- und Mischelement ausgebildet ist.

13. Vorrichtung nach einem oder mehreren der Ansprüche 9 bis 12, gekennzeichnet durch eine zwischen Mischeinrichtung und Eingangsseite der Temperiermaschine geschaltete Wärmeeinrichtung.

14. Vorrichtung nach einem oder mehreren der Ansprüche 9 bis 13, gekennzeichnet durch in den zur Abgabestelle führenden Zweig der Masse eingeschaltete Strangformeinrichtungen, wie eine Düse oder dergleichen.

15. Vorrichtung nach einem oder mehreren der Ansprüche 9 bis 14, gekennzeichnet durch ein kontinuierlich mit einer regelbaren und/oder einstellbaren Geschwindigkeit antreibbares Transportband, auf dem der gebildete Strang ablegbar ist.

16. Vorrichtung nach einem oder mehreren der Ansprüche 9 bis 15, gekennzeichnet durch eine den Massestrang auf dem Weg von der Düse bis zur Abgabestelle zumindest auf einem Teil der Strecke beeinflussende Klimakammer oder dergleichen.

## Claims

1. A method of working up nougat mass for further processing in a processing machine, characterised in that a mass circuit of nougat mass is formed from which the worked up nougat mass which is to be prepared for further processing is branched off in a moderate temperature state and into whose portion, which remains in the circuit after the branching point and is controllable and/or adjustable in quantity, a quantity corresponding to the branched off mass is introduced from a supply of mass at a point following the branching point in the circuit, this quantity being mixed with the circulating quantity and having its temperature moderated therewith as a thoroughly mixed mass before a portion is branched off for further processing.

2. A method according to claim 1, characterised in that mixing is carried out with cooling of the freshly supplied mass.

3. A method according to claim 1 or 2, characterised in that the mass is heated after mixing, before its temperature is moderated.

4. A method according to one or more of claims 1 to 3, characterised in that the branched off portion of the mass is subjected to a subsequent treatment.

5. A method according to claim 4, characterised in that the branched off portion is extruded in strand form and is deposited on a substrate.

6. A method according to claim 4 or 5, characterised in that the deposited strand of mass is left alone at least for a certain period of time.

7. A method according to claim 4, 5 or 6, characterised in that the deposited strand is brought into a limited or substantially limited space for protection against external influences.

8. A method according to claim 4, 5 or 6, characterised in that the deposited strand is influenced by cooling or heating.

9. Apparatus for working up nougat mass for further processing, for carrying out the method according to one or more of claims 1 to 8, using a temperature moderating machine, characterised by a line branch which is inserted into the outlet line of the temperature moderating machine and through which the mass stream leaving the temperature moderating machine can be divided into two partial streams whose content in the total stream is controllable and/or adjustable and from which one branch is guided via conveyors to a discharge point for further processing, while the other branch is connected to a mixing device which is equipped predominantly with a cooler, which is located in a return circuit in series with the inlet side of the temperature moderating machine and at whose inlet side a supply line connected to a storage container for nougat mass opens for compensating for the quantities of the mass discharged at the discharge side, wherein the mass circuit can be monitored and controlled by temperature measuring devices distributed at intervals over the length of the circuit in the parts forming it.

10. Apparatus according to claim 9, characterised in that a controllable or adjustable mass pump is connected in the return circuit, in particular immediately downstream of the line branch.

11. Apparatus according to claim 9 or 10, characterised in that the mixing device is constructed as a more or less elongate chamber, in which elements promoting the intimate mixing of the mass are arranged.

12. Apparatus according to one or more of claims 9 to 11, characterised in that the mixing device is constructed in the manner of a temperature moderating device with a temperature moderating screw as conveying and mixing element.

13. Apparatus according to one or more of claims 9 to 12, characterised by a heating device connected between mixing device and inlet side of the temperature moderating machine.

14. Apparatus according to one or more of claims 9 to 13, characterised by strand forming devices such as a nozzle or the like inserted in the branch of the mass leading to the discharge point.

15. Apparatus according to one or more of claims 9 to 14, characterised by a conveyor belt which can be driven continuously at a controllable and/or adjustable speed and on which the formed strand can be deposited.

16. Apparatus according to one or more of claims 9 to 15, characterised by a climatic chamber or the like which influences the mass strand on the path from the nozzle to the discharge point, at least over a proportion of the distance.

**Revendications**

1.) Procédé de préparation de masse de nougat pour la transformation dans une machine de transformation, caractérisé en ce qu'on forme un cycle de masse de nougat, sur lequel on prélève de la masse de nougat en équilibre de température traitée et prête à la transformation et on y injecte après la prise de dérivation une quantité correspondant à la masse prélevée, provenant d'une réserve de masse, à un endroit du cycle suivant la prise de dérivation, cette quantité étant réglable, elle est mélangée à la masse se trouvant encore dans le cycle et en équilibre de température avec elle en tant que mélange homogène avant qu'une partie soit prélevée pour la transformation.

2.) Procédé selon la revendication 1, caractérisé en ce qu'on réalise le mélange en refroidissant la masse qu'on vient d'introduire.

3.) Procédé selon la revendication 1 ou 2, caractérisé en ce que la masse est réchauffée après le mélange, avant qu'elle soit en équilibre de température.

4.) Procédé selon une ou plusieurs des revendications 1 à 3, caractérisé en ce que la partie prélevée de la masse est soumise à un traitement ultérieur

5.) Procédé selon la revendication 4, caractérisé en ce que la partie prélevée est extrudée en barre et déposée sur un support.

6.) Procédé selon la revendication 4 ou 5, caractérisé en ce qu'on laisse la barre extrudée déposée au repos pendant un certain temps.

7.) Procédé selon la revendication 4, 5 ou 6, caractérisé en ce qu'on place la barre déposée dans une pièce isolée ou largement isolée pour la protéger d'influences extérieures.

8.) Procédé selon la revendication 4, 5 ou 6, caractérisé en ce que la barre déposée est traitée par refroidissement ou par chauffage.

9.) Dispositif de préparation de masse de nougat pour la transformation, pour réaliser le procédé selon l'une ou plusieurs des revendications 1 à 8, en utilisant une machine de mise en équilibre de la température caractérisé par une conduite de dérivation branchée sur la conduite de sortie de la machine de grâce à laquelle le courant massique quittant la machine peut être divisé en deux parties, dont l'importance par rapport au courant total est réglable ou ajustable, et dont une dérivation est dirigée vers des dispositifs de transferts, à une sortie, pour la transformation ultérieure, tandis que l'autre branche est reliée à un dispositif de mélange, qui est équipé de préférence d'un dispositif de refroidissement, qui est inclus dans un circuit de recyclage en série avec l'entrée de mise en équilibre de température et dont l'entrée est reliée à une conduite d'amenée branchée à un réservoir de masse de nougat pour la compensation massique de la masse délivrée à la sortie, le circuit massique pouvant être surveillé et régulé par des dispositifs de mesure de température qui sont disposés à intervalles sur les pièces constituant toute la longueur du circuit.

10.) Dispositif selon la revendication 9, caractérisé en ce que, dans le circuit de recyclage, est branchée une pompe réglable ou ajustable, notamment directement après la dérivation de conduite.

11.) Dispositif selon la revendication 9 ou 10, caractérisé en ce que le dispositif de mélange est constitué d'une chambre plus ou moins longue, dans laquelle on a disposé des éléments qui favorisent le mélange de la masse.

12.) Dispositif selon l'une ou plusieurs des revendications 9 à 11, caractérisé en ce que le dispositif de mélange est constitué d'un dispositif de mise en équilibre de température avec une vis de mise en équilibre de température, comme élément de mélange et de transfert.

13.) Dispositif selon l'une ou plusieurs des revendications 9 à 12, caractérisé par un dispositif de chauffage branché entre le dispositif de mélange et l'entrée de la machine de mise en équilibre de température.

14.) Dispositif selon l'une ou plusieurs des revendications 9 à 13, caractérisé par des dispositifs d'extrusion branchés sur la conduite allant au poste de dépôt, tel qu'une buse ou analogue.

15.) Dispositif selon l'une ou plusieurs des revendications 9 à 14, caractérisé par une bande transporteuse entraînée à une vitesse réglable et ou ajustable en continu sur laquelle on peut déposer la barre formée.

16.) Dispositif selon l'une ou plusieurs des revendications 9 à 15, caractérisé par une chambre de climatisation ou analogue exerçant son influence sur la barre de nougat, sur le chemin de la buse au poste de dépôt, tout au moins sur une partie de cette distance.